Europäisches Patentamt

**European Patent Office**

**Office européen des brevets**

(11) Veröffentlichungsnummer: **0 194 229**
A2

(12) **EUROPÄISCHE PATENTANMELDUNG**

(21) Anmeldenummer: **86810093.4**

(22) Anmeldetag: **24.02.86**

(51) Int. Cl.⁴: **G 02 B 5/00,** G 01 N 21/47,
G 01 N 21/59, G 02 B 6/04

(30) Priorität: **07.03.85 CH 1039/85**

(43) Veröffentlichungstag der Anmeldung: **10.09.86**
**Patentblatt 86/37**

(84) Benannte Vertragsstaaten: **AT CH DE FR GB IT LI NL SE**

(71) Anmelder: **VOLPI AG, Wiesenstrasse 33,
CH-8952 Schlieren (CH)**

(72) Erfinder: **Morger, Erich, Schlossbungert 5,
CH-7320 Sargans (CH)**

(74) Vertreter: **Seifert, Helmut E., RITSCHER & SEIFERT
Patentanwälte Auf der Mauer 4, CH-8001 Zürich (CH)**

(54) **Verfahren zum Beleuchten eines Objekts.**

(57) Beim Beleuchten eines Objekts mittels einer Projektionsoptik und einer punktförmigen Lichtquelle oder beim Abbilden eines gleichmässig beleuchteten Objekts mittels einer Abbildeoptik auf einer Fläche ist die Beleuchtungsstärke bzw. die Flächenhelligkeit wegen des verwendeten optischen Systems im Bereich der optischen Achse am grössten und nimmt mit zunehmendem Abstand von der optischen Achse ab. Erfindungsgemäss wird darum eine ringförmige Lichtquelle vorgeschlagen, die im Bereich der optischen Achse eine verringerte Leuchtdichte aufweist, was ermöglicht, eine praktisch homogene Beleuchtungsstärke oder Flächenhelligkeit zu erzeugen.

Als bevorzugte ringförmige Lichtquelle wird ein faseroptisches Ringlicht verwendet.

ACTORUM AG

0194229

## Verfahren zum Beleuchten eines Objekts

Die vorliegende Erfindung betrifft ein Verfahren zum Beleuchten eines Objekts mittels einer Lichtquelle und einer Projektionsoptik, die diese Lichtquelle auf dem Objekt abbildet, sowie eine bevorzugte Anwendung dieses Verfahrens und eine Vorrichtung zum Messen oder Bestimmen der Reflexion eines Objekts.

Beim Beleuchten eines Objekts mit Licht, das von einer Projektionsoptik auf dieses Objekt übertragen wird, ist die Beleuchtung und bei einem gleichmässig reflektierenden Objekt auch der Helligkeitseindruck in dem Bereich, wo die optische Achse der Projektionsoptik auf das Objekt auftrifft, am grössten und nimmt mit zunehmendem Abstand von diesem Bereich ab. Diese Verteilung der Beleuchtung entspricht dem $\cos^4$-Gesetz, das beispielsweise in dem Buch von M. YOUNG "Optics and Lasers", Seite 48, erschienen im Springer-Verlag, abgeleitet wird. Die der unterschiedlichen Beleuchtung entsprechende unterschiedliche Objekthelligkeit ist bei visueller Beobachtung des gesamten Objekts nicht auffällig, kann aber das Ausmessen der Helligkeit eines beleuchteten Objekts beeinträchtigen.

Diese Beeinträchtigung wird dann zu einem echten Nachteil, wenn die Helligkeit eines Objekts mit einem vorgegebenen Helligkeitswert verglichen wird, beispielsweise um die Qualität von Halbfabrikaten oder Werkstücken zu prüfen. Bei einer

- 2 -

0194229

bekannten Anordnung zur Qualitätskontrolle wird ein beleuchtetes Objekt mit einer opto-elektronischen Bildaufnahmeröhre "betrachtet". Das Bild der Fläche wird auf der Bildplatte der Röhre in eine Vielzahl einzelner Bildpunkte zerlegt, von denen jeder ein elektrisches Ausgangssignal erzeugt, dessen Amplitude der Beleuchtung des Bildpunkts entspricht. Die Ausgangssignale werden an eine Schwellwertmessschaltung geleitet, an deren Ausgang digitale Signale erscheinen, die angeben, ob die Eingangssignale über oder unter einem einstellbaren Schwellwert liegen. Die digitalen Signale werden gezählt, und die Anzahl der über oder unter dem einstellbaren Schwellwert liegenden Signale wird als Mass für die Qualität der Sektoren verwendet.

Es versteht sich, dass diese Art der Qualitätsbestimmung nur dann zuverlässige Ergebnisse liefert, wenn das Objekt derart beleuchtet wird, dass die Abbildung eines Objekts mit homogener Oberflächenhelligkeit auf der Bildplatte eine gleichmässige Helligkeit aufweist. Diese Bedingung ist in der Praxis nicht erfüllt, weil sowohl die Beleuchtung des zu prüfenden Objekts wegen der dafür verwendeten Projektionsoptik als auch die Abbildung des Objekts auf der Bildplatte in der Bildaufnahmeröhre wegen des dafür verwendeten Objektivs eine dem oben zitierten Gesetz entsprechende Beleuchtungs- bzw. Helligkeitsverteilung aufweisen.

Um bei dem beschriebenen Prüfverfahren diese zweimalige, ungleichmässige Beleuchtungs- bzw. Helligkeitsverteilung zu korrigieren, ist es bekannt, zuerst ein Vergleichsobjekt mit homogenem Grau- oder Farbwert zu prüfen und die Werte der dabei erzeugten Ausgangssignale aller oder einiger ausgewählter Bildpunkte zu speichern und danach die Ausgangssignale der Bildpunkte des zu prüfenden Objekts mit den entsprechenden gespeicherten Werten zu korrigieren. Es versteht sich,

- 3 -

0194229

dass diese Art des Korrigierens technisch sehr aufwendig ist, wiederholte Neueinstellungen der gespeicherten Werte erfordert und darum für den Einsatz in einer Produktionslinie nur bedingt brauchbar ist.

Der vorliegenden Erfindung lag darum die Aufgabe zugrunde, ein Verfahren zum Beleuchten eines Objekts zu schaffen, bei dem das Objekt sowohl bei direkter visueller Betrachtung als auch beim Abbilden auf einer Bildplatte, einem Bildschirm oder einer Mattscheibe gleichmässig ausgeleuchtet erscheint.

Erfindungsgemäss wird diese Aufgabe mit einem Verfahren der eingangs genannten Art gelöst, das dadurch gekennzeichnet ist, dass eine ringförmige Lichtquelle mit homogener Leuchtdichte verwendet wird, durch deren Mittelpunkt die optische Achse der Projektionsoptik verläuft.

Das erfindungsgemässe Verfahren ermöglicht, die durch die Projektionsoptik bewirkte und mit zunehmendem Abstand von deren Achse nach dem oben beschriebenen $\cos^4$-Gesetz abnehmende Beleuchtungsdichte zu korrigieren und ein Objekt derart zu beleuchten, dass es bei direkter Betrachtung oder beim Abbilden auf einem Bildschirm eine praktisch homogene Helligkeit aufweist.

Bei einer bevorzugten Ausführungsform des Verfahrens wird zwischen der Lichtquelle und der Projektionsoptik ein Diffusor angeordnet, der die Helligkeitsverteilung in der Ebene der ringförmigen Lichtquelle ausgleicht.

Eine bevorzugte Anwendung des erfindungsgemässen Verfahrens ist das Beleuchten eines Objekts, dessen Reflexion oder Transmission sektorweise bestimmt wird. Wird bei dieser Anwendung die Reflexion oder Transmission mit optischen Einrichtungen bestimmt, dann kann durch geeignete Wahl der ringförmigen Lichtquelle und des Diffusors auch die

- 4 -

0194229

durch die letztere Einrichtung bewirkte Verteilung der Beleuchtung berichtigt werden.

Als bevorzugte ringförmige Lichtquelle wird erfindungsgemäss die Austrittsfläche eines faseroptischen Ringlichts verwendet.

Nachfolgend wird die Erfindung mit Hilfe der Figuren erläutert. Es zeigen:

Fig. 1a die schematische Darstellung einer Lichtquelle mit homogener Leuchtdichte und einer Projektionsoptik,

Fig. 1b die grafische Darstellung der Beleuchtung, die längs zweier die optische Achse der Anordnung gemäss Fig. 1a schneidender Geraden gemessen wurde,

Fig. 2a die schematische Darstellung einer ringförmigen Lichtquelle mit einem Diffusor, einer Projektions- und einer Abbildeoptik,

Fig. 2b die grafische Darstellung der Beleuchtung, die längs mehrerer, die optische Achse der Anordnung gemäss Fig. 2a schneidender Geraden gemessen wurde und

Fig. 3 die Prinzipskizze einer Vorrichtung zum Messen der Reflexion eines beleuchteten Objekts.

Die Fig. 1a zeigt schematisch eine Ulbricht'sche Kugel 10, in deren Mitte eine Lichtquelle 11 angeordnet ist und die ein planes Lichtaustrittsfenster 12 aufweist. Die Ulbricht'sche Kugel ist jedem Fachmann bekannt, weshalb auf deren Aufbau und Funktion hier nicht eingegangen wird. Vom Aus-

trittsfenster beabstandet ist eine Projektionsoptik 13 angeordnet, die das Fenster in der Ebene 14 abbildet. Die Projektionsoptik ist eine einfache Sammellinse, deren optische Achse 16 senkrecht auf dem Fenster und auf der Bildebene steht.

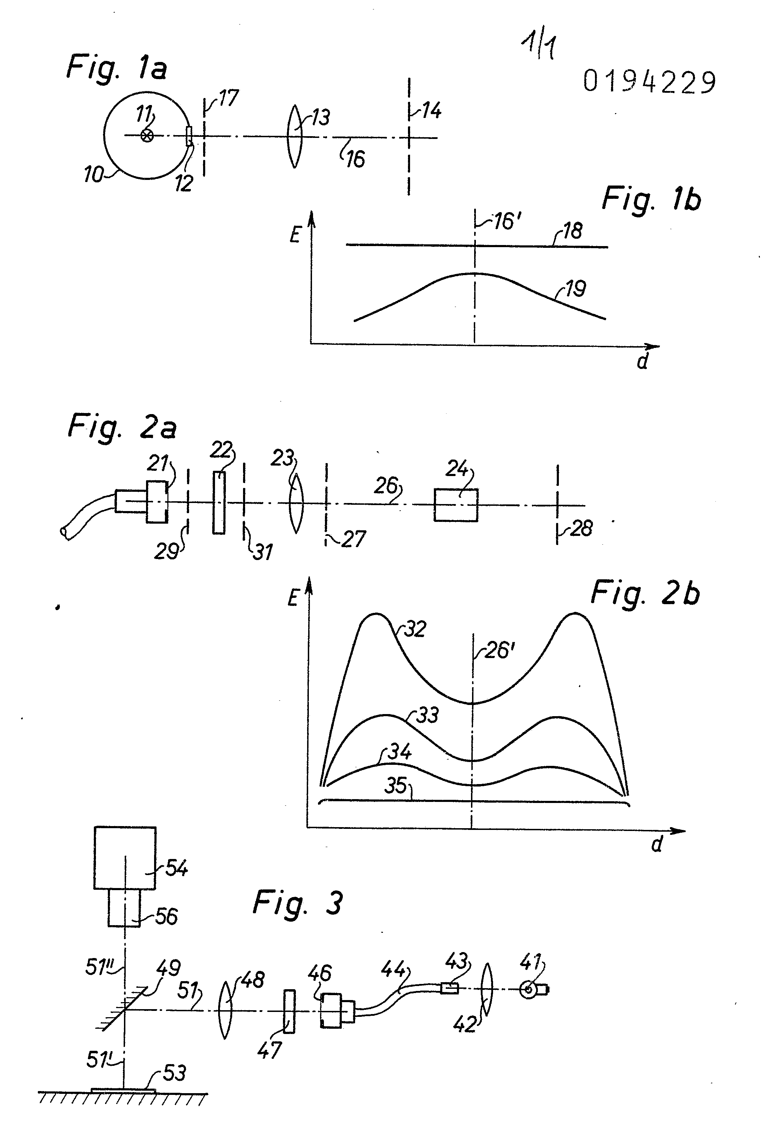

Die Fig. 1b zeigt in grafischer Darstellung den prinzipiellen Verlauf der Kurven für die von einem (nicht gezeigten) Messgerät aufgenommene Beleuchtungsstärke, wenn das Gerät längs einer geradlinigen Bahn 17 (Fig. 1a) vor dem Fenster der Ulbricht'schen Kugel bzw. in der Bildebene 14 verschoben wird. Die Bahn 17 verläuft quer zur und schneidet die optische Achse der Projektionsoptik. In der Grafik ist die Beleuchtungsstärke (E) längs der Ordinate, der Verschiebeweg (d) längs der Abszisse aufgetragen. Die gestrichelte Linie 16' entspricht dem Ort, wo die Verschiebebahn die optische Achse der Messanordnung kreuzt. Die Kurve 18 dieser Grafik ist eine zur Abszisse parallele Linie, was bedeutet, dass die Beleuchtungsstärke vor dem Fenster der Ulbricht'schen Kugel und längs der Verschiebebahn 17 konstant ist. Die Kurve 19 kann als Glockenkurve bezeichnet werden und zeigt deutlich, dass die Beleuchtungsstärke in der Bildebene 14, d.h. nach der Projektionsoptik 13, eine dem einleitend zitierten $\cos^4$-Gesetz entsprechende Verteilung um das in der optischen Achse 16' liegende Maximum der Beleuchtungsstärke aufweist.

Die Fig. 2a zeigt wiederum schematisch eine ringförmige Lichtquelle 21, einen Diffusor 22, eine Projektionsoptik 23 und ein Abbildeobjektiv 24. Die Projektionsoptik und das Abbildeobjektiv sind derart ausgerichtet, dass ihre optischen Achsen 26 zusammenfallen. Die Bildebene der Projektionsoptik und die Bildebene der Abbildeoptik sind mit gestrichelten Linien 27 bzw. 28 gezeichnet.

- 6 -

0194229

Die Fig. 2b zeigt in grafischer Darstellung den prinzipiellen Verlauf der Kurven für die mit einem (nicht gezeigten) Messgerät aufgenommene Beleuchtungsstärke, wenn das Gerät längs einer geradlinigen Bahn 29 (Fig. 2a) vor der ringförmigen Lichtquelle, längs einer Bahn 31 vor dem Diffusor und längs der Bahnen 27 und 28 in der Bildebene der Projektionsoptik bzw. dem Abbildeobjektiv verschoben wird. In dieser Grafik ist (ebenso wie in Fig. 1b) die gemessene Beleuchtungsstärke (E) längs der Ordinate, der Verschiebeweg (d) des Messgeräts längs der Abszisse aufgetragen und die Punkte, in denen die Verschiebebahnen die optische Achse 26 kreuzen, sind mit der strichpunktierten Linie 26' verbunden. Die grafische Darstellung zeigt deutlich, dass die Kurve 32 für die Beleuchtungsstärke längs der Verschiebebahn 29 dort, wo die Bahn vor der ringförmigen Lichtquelle verläuft, Maxima aufweist, die im Bereich der optischen Achse von einem Minimum verbunden sind. Längs der Verschiebebahn 31 ist die Beleuchtungsstärke wegen der vorgängigen Streuung des Lichts im Diffusor schwächer als direkt vor der Lichtquelle, weshalb in der Grafik die entsprechende Kurve 33 tiefer als die Kurve 32 liegt. Die Kurve 33 zeigt auch, dass die Maxima der Beleuchtungsstärke nach dem Durchgang des Lichts durch den Diffusor flacher verlaufen als direkt vor der Lichtquelle und dass der Unterschied zwischen den Maxima und dem dazwischenliegenden Minimum geringer geworden ist. Die längs der Verschiebebahn 27 in der Bildebene der Projektionsoptik gemessene Beleuchtungsstärke ist wegen des Lichtverlusts in der Projektionsoptik gesamthaft wiederum geringer als vor dem Diffusor, und die entsprechende Kurve 34 zeigt wegen der eingangs diskutierten (und mit der Kurve 19 in Fig. 1b gezeigten) Verteilung der Beleuchtung nach dem Durchgang des Lichts durch ein optisches System nochmals verbreiterte Maxima und einen nochmals verringerten Unterschied zwischen den Maxima und dem verbindenden Minimum. Schliesslich zeigt die Kurve 35,

- 7 -

0194229

die den Werten der Beleuchtungsstärke längs der Verschiebebahn 28 in der Bildebene des Abbildeobjektivs entspricht, dass die Beleuchtungsstärke nochmals gesamthaft geringer geworden ist, aber zugleich die Maxima und das Minimum verschwunden sind, d.h. die Beleuchtungsstärke in der Bildebene praktisch unabhängig vom Ort der Messung überall gleich ist.

Die beschriebenen Messanordnungen und die damit erzielten Messergebnisse zeigen, dass die beim Beleuchten einer ebenen Fläche mittels eines optischen Systems, das im einfachsten Fall auch eine einzige Linse sein kann, auftretende, dem $\cos^4$-Gesetz entsprechende Verteilung der Beleuchtungsstärke durch die Verwendung einer ringförmigen Lichtquelle korrigiert werden kann. Für die praktische Anwendung dieser erfindungsgemässen Massnahme liegt es im Bereich fachmännischen Könnens, für eine oder mehrere bestimmte optischen Systeme diejenigen Abmessungen der ringförmigen Lichtquelle und diejenige Streuung des Diffusors zu ermitteln, mit denen eine optimale Verteilung der Beleuchtung in der Bildebene erreicht werden kann.

Fig. 3 zeigt die Prinzipskizze einer Vorrichtung zum Kontrollieren der Reflexion einzelner Sektoren einer grösseren Oberfläche, bei der das erfindungsgemässe Verfahren angewendet ist. Die Vorrichtung enthält eine Lichtquelle 41 und eine Sammellinse 42, die das Licht von der Lichtquelle in die Eingangsfläche 43 eines Faserlichtleiters 44 mit gemischten Fasern einleitet. Das Austrittsende 46 des Faserlichtleiters ist als Ringlicht ausgebildet, das wegen der Durchmischung der Fasern auf seiner gesamten Fläche eine homogene Leuchtdichte aufweist. Solche faseroptischen Ringlichter sind handelsüblich, weshalb auf deren Beschreibung hier absichtlich verzichtet wird. Von

- 8 -

0194229

der Austrittsfläche des Ringlichts beabstandet ist ein Diffusor 47 angeordnet, beispielsweise ein Cosinus-Diffusor, oder einfacherweise eine Mattscheibe. Weiter enthält die Vorrichtung eine Projektionsoptik 48, beispielsweise eine Sammellinse, und einen halbdurchlässigen Spiegel 49. Die optische Achse 51 der Projektionsoptik steht senkrecht auf der Ebene des Diffusors und der Mitte des Ringlichts, während der halbdurchlässige Spiegel um 45° gegen diese optische Achse geneigt ist. In dem vom Spiegel abgewinkelten Teil 51' der optischen Achse und in der Bildebene der Projektionsoptik ist auf einem Tisch 52 ein Werkstück 53 aufgelegt. Der Tisch ist in beiden Richtungen seiner horizontalen Ebene verschiebbar. Auf der Rückseite des Spiegels und in der Verlängerung 51" des abgelenkten Teils der optischen Achse ist eine opto-elektronische Kamera 54, beispielsweise ein Vidikon, angeordnet, deren zugehöriges Aufnahmeobjektiv 56 das Werkstück 53 auf der Speicherplatte der Kamera abbildet. Der Ausgang der opto-elektronischen Kamera ist mit elektronischen Schaltungen verbunden, die die Helligkeit der einzelnen Bildpunkte auf der Speicherplatte auswerten. Diese Schaltungen sind im Zusammenhang mit der vorliegenden Erfindung ohne Bedeutung, weshalb sie weder gezeigt noch beschrieben sind.

Eine erprobte Verwendung der beschriebenen Vorrichtung war das Aussortieren einzelner Teile eines mehrteiligen Werkstücks in Abhängigkeit von deren Reflexion. Dazu wurde das Werkstück auf den Werktisch gelegt, von der ringförmigen Lichtquelle beleuchtet und auf der Bildplatte der Kamera abgebildet. Danach wurde die Helligkeit aller Bildpunkte, die zwischen Koordinaten lagen, die den Rändern der einzelnen Teile des Werkstücks entsprachen, bewertet und für jedes Werkstückteil die Anzahl derjenigen Bildpunkte gezählt, deren Helligkeit grösser war als ein

0194229

vorgegebener Wert. Weil bei dieser Vorrichtung die ringförmige Lichtquelle eine Abbildung des Werkstücks mit gleichmässiger Helligkeit ermöglichte, konnten die Werkstückteile praktisch fehlerfrei in solche mit einer grösseren und in solche mit einer kleineren als der vorgegebenen Reflexion getrennt werden.

Es versteht sich, dass das beschriebene Verfahren und die Vorrichtung auf vielerlei Arten abgewandelt und an spezielle Bedingungen angepasst werden können. Beispielsweise ist das Verfahren nicht nur auf das Beleuchten eines Objekts mit Auflicht beschränkt, sondern ebenso gut zum Beleuchten eines Objekts mit Durchlicht geeignet. Es ist auch möglich, als Lichtquelle anstelle des beschriebenen, vorzugsweise verwendeten Faserlichtleiters eine andere ringförmige Lichtquelle zu verwenden, vorausgesetzt, dass diese eine homogene Leuchtdichte aufweist. Weiter ist es möglich, auf den beschriebenen Diffusor zu verzichten und die Beleuchtung allein mit einer ringförmigen Lichtquelle entsprechender Abmessungen zu korrigieren. Bei der beschriebenen Vorrichtung kann die Anordnung der ringförmigen Lichtquelle, des Diffusors und der Projektionsoptik sowie die der Kamera mit ihrem Abbildungsobjektiv relativ zum halbdurchlässigen Spiegel vertauscht werden. Dass für die Korrektur der Helligkeitsverteilung eines oder mehrerer verwendeter optischer Systeme vorzugsweise an die Eigenschaften dieser Systeme angepasste ringförmige Lichtquellen und Diffusoren verwendet werden und die Auswahl einer an vorgegebene Bedingungen optimal angepassten ringförmigen Lichtquelle sowie eines mit dieser abgestimmten Diffusors im Bereich fachmännischen Könnens liegt, wurde bereits erwähnt. Schliesslich versteht sich auch, dass zum Einleiten des Lichts der primären Lichtquelle in die Eingangsfläche des Faserlichtleiters anstelle der in Fig. 3 gezeigten Sammellinse eine mit einem Reflektor versehene Lichtquelle verwendet werden kann.

- 10 -

0194229

Patentansprüche

1. Verfahren zum gleichmässigen Beleuchten eines Objekts mit mindestens einer Lichtquelle und einer Projektionsoptik, die die Lichtquelle auf diesem Objekt abbildet, dadurch gekennzeichnet, dass zum Kompensieren der durch die Projektionsoptik bewirkten, mit zunehmendem Abstand von deren optischer Achse abnehmenden Beleuchtungsstärke eine ringförmige Lichtquelle mit homogener Leuchtdichte, durch deren Mittelpunkt die optische Achse der Projektionsoptik verläuft, verwendet wird.

2. Verfahren nach Anspruch 1, dadurch gekennzeichnet, dass zum Ausgleich der Helligkeitsverteilung der ringförmigen Lichtquelle zwischen dieser Lichtquelle und der Projektionsoptik ein Diffusor angeordnet wird.

3. Verfahren nach Anspruch 1, dadurch gekennzeichnet, dass als ringförmige Lichtquelle die Austrittsfläche eines faseroptischen Ringlichts verwendet wird.

4. Verfahren nach Anspruch 2, dadurch gekennzeichnet, dass als Diffusor eine Mattscheibe oder ein Cosinus-Diffusor oder eine diffuse Optik verwendet wird.

5. Anwendung des Verfahrens nach Anspruch 1 zum Beleuchten eines Objekts, dessen Reflexion oder Transmission sektorweise gemessen oder bestimmt wird.

6. Anwendung nach Anspruch 5, dadurch gekennzeichnet, dass zum Messen oder Bestimmen ein opto-elektronischer Wandler und eine zwischen der Fläche und dem Wandler angeordnete Abbildungsoptik verwendet werden und die ringförmige Licht-

quelle und/oder der Diffusor so gewählt werden, dass auch die von der Abbildungsoptik auf der Wandelfläche bewirkte Beleuchtungsstärkeverteilung kompensiert wird.

7. Anwendung nach Anspruch 5, dadurch gekennzeichnet, dass zum Messen oder Bestimmen der Reflexion mit einer Abbildungsoptik deren optische Achse im Bereich des Objekts mit der optischen Achse der Projektionsoptik zusammenfällt, zwischen der Fläche und der Abbildungs- und der Projektionsoptik ein teilweise lichtdurchlässiger Spiegel oder ein Prisma angeordnet wird.

8. Vorrichtung zum sektorweisen Messen oder Bestimmen der Reflexion einer Fläche (53) mit einer Einrichtung (46, 47, 48, 49) zum Beleuchten dieser Fläche mit senkrecht einfallendem Licht und mit einem opto-elektronischen Wandler (54) zum Messen oder Bestimmen des in senkrechter Richtung reflektierten Lichts, welche Beleuchtungseinrichtung eine Projektionsoptik (48) zum Abbilden der Lichtquelle (46) auf der Fläche aufweist und welchem Wandler ein Objektiv (56) zum Abbilden der beleuchteten Fläche auf der Wandelfläche zugeordnet ist, sowie mit einem teilweise durchlässigen Spiegel (49) oder Prisma, um die unterschiedliche Richtungen aufweisenden und sich auf dem Spiegel oder einer Fläche des Prisma schneidenden optischen Achsen (51, 51") der Beleuchtungseinrichtung und des Abbildeobjektivs in der Verlängerung der einen optischen Achse (51') zu vereinigen, dadurch gekennzeichnet, dass die Beleuchtungseinrichtung zum Kompensieren der durch die Projektionsoptik (48) auf der beleuchteten Fläche (53) und das Abbildeobjektiv (56) auf der Wandelfläche des Wandlers (54) bewirkten, mit zunehmendem seitlichem Abstand von der optischen Achse (51' bzw. 51") abnehmenden Beleuchtungsdichte eine ringförmige Lichtquelle (46) mit homogener Leuchtdichte aufweist, deren ringförmige Leuchtfläche quer zur optischen Achse (51) der Projektionsoptik (48) angeordnet ist und deren Mittelpunkt auf dieser Achse liegt.

9. Vorrichtung nach Anspruch 8, dadurch gekennzeichnet, dass die ringförmige Lichtquelle (46) die Austrittsfläche eines faseroptischen Ringlichts ist.

10. Vorrichtung nach Anspruch 8, dadurch gekennzeichnet, dass zum Ausgleich der Helligkeitsverteilung im Querschnitt des Beleuchtungslichtbündels zwischen der ringförmigen Lichtquelle (46) und der Projektionsoptik (48) ein Diffusor (47) angeordnet ist.

S/mm 8.2.85

0194229

Fig. 1a

Fig. 1b

Fig. 2a

Fig. 2b

Fig. 3